# EUROPÄISCHE PATENTANMELDUNG

(11) **EP 1 925 883 A1**
(43) Veröffentlichungstag der Anmeldung: **28.05.2008**
(21) Anmeldenummer: 06124860.5
(22) Anmeldetag: 27.11.2006
(51) Int. Cl.: F23D 11/44, F23K 5/20, F02G 1/055, F23L 15/04

(54) **Wärmequelle mit regelbarer Ölzuführung und Verfahren zum Betrieb derselben**

(71) Anmelder: Stirling Systems AG, 8200 Schaffhausen (CH)
(72) Erfinder: Schlegel, Andreas, 8135 Langnau am Albis (CH)
(74) Vertreter: Dr. Graf & Partner

(57) **Zusammenfassung**

Die Wärmequelle (1) mit regelbarer Ölzuführung (13) umfasst eine Brennkammer (3) zur Erzeugung von Wärme, und umfasst einen Ölbrenner (2) und eine Vorrichtung zur Wärmeabnahme (10), welche in die Brennkammer (3) münden, wobei die Ölzuführung (13) eine Temperiervorrichtung (13b) zur Erwärmung und/oder Kühlung des Öls umfasst, und wobei ein Sensor (14) zum Messen einer Prozesstemperatur (Tp) der Wärmequelle (1) angeordnet ist, und wobei eine Regelvorrichtung (15) mit dem Sensor (14) sowie der Temperiervorrichtung (13b) verbunden und derart wirkend ausgestaltet ist, dass die Prozesstemperatur (Tp) in einem vorbestimmten Temperaturbereich (ΔTp) liegt.

## Beschreibung

### Beschreibung

Die Erfindung betrifft eine Wärmequelle mit regelbarer Ölzuführung gemäss dem Oberbegriff von Anspruch 1. Die Erfindung betrifft weiter ein Verfahren zum Betrieb der Wärmequelle mit regelbarer Ölzuführung.

### Stand der Technik

Es ist bekannt, mittels kleinen, dezentralen Blockheizkraftwerken aus Brennstoffenergie elektrische Energie und Heizungswärme zu erzeugen. Um diese kleinen Einheiten mit einem hohen elektrischen Wirkungsgrad zu betreiben sind Wärmequellen erforderlich, welche Temperaturen bis etwa 1000 °C erzeugen. Weiter ist es erforderlich, dass die Schadstoffemission (NOx und CO) niedrig ausfällt. Da diese Blockheizkraftwerke als Gebäudeheizungen verwendet werden, sind zudem eine hohe Zuverlässigkeit und Lebensdauer, sowie eine einfache Montage und eine günstige Wartung erforderlich.

Aus der Druckschrift EP 1 048 901 A1 ist ein Hochtemperatur-Gaserhitzer bekannt, welcher für Blockheizkraftwerke verwendet wird. Ein derartiges Blockheizkraftwerk weist den Nachteil auf, dass es ohne eine ständige Wartung nicht längerfristig bei optimalem Wirkungsgrad betreibbar ist.

### Darstellung der Erfindung

Aufgabe der Erfindung ist es eine Wärmequelle zu schaffen, welche es ermöglicht ein Blockheizkraftwerk umfassend eine Wärmequelle und eine Wärmekraftmaschine längerfristig mit hohem Wirkungsgrad zu betreiben.

Diese Aufgabe wird gelöst mit einer Wärmequelle aufweisend die Merkmale von Anspruch 1. Die Unteransprüche 2 bis 4 betreffen weitere, vorteilhafte Ausgestaltungen. Die Aufgabe wird weiter gelöst mit einem Verfahren zum Betrieb der Wärmequelle aufweisend die Merkmale von Anspruch 5. Die abhängigen Ansprüche 6 bis 9 betreffen weitere vorteilhafte Verfahrensschritte.

Die Aufgabe wird insbesondere gelöst mit einer Wärmequelle mit regelbarer Ölzuführung, wobei die Wärmequelle eine Brennkammer zur Erzeugung von Wärme umfasst, und wobei die Wärmequelle einen Ölbrenner und eine Vorrichtung zur Wärmeabnahme umfasst, welche beide in die Brennkammer münden, und wobei die Ölzuführung eine Temperiervorrichtung zur Erwärmung und/oder Kühlung des Öls umfasst, und wobei ein Sensor zum Messen einer Prozesstemperatur Tp der Wärmequelle angeordnet ist, und wobei eine Regelvorrichtung mit dem Sensor sowie der Temperiervorrichtung verbunden und derart wirkend ausgestaltet ist, dass die Prozesstemperatur Tp in einem vorbestimmten Temperaturbereich ΔTp liegt.

Die Aufgabe wird zudem insbesondere gelöst mit einem Verfahren zum Betrieb der erfindungsgemässen Wärmequelle umfassend eine Temperiervorrichtung zur Erwärmung und/oder Kühlung des Öls, wobei die Temperiervorrichtung die Viskosität des Öls derart beeinflusst, dass die Prozesstemperatur Tp in einem vorbestimmten Temperaturbereich ΔTp liegt.

Für den Betrieb eines Blockheizkraftwerkes ist es von entscheidender Bedeutung, dass die Anlage einen hohen elektrischen Wirkungsgrad aufweist, beziehungsweise dass ein hoher Anteil elektrischer Energie erzeugt werden kann. Es hat sich gezeigt, dass dies dadurch erzielt werden kann, dass die Wärmekraftmaschine, beispielsweise ein Stirlingmotor, möglichst innerhalb eines vorgegebenen Temperaturbereichs betrieben wird. Um einen hohen Wirkungsgrad zu erzielen ist es wünschenswert den Stirlingmotor bei möglichst hohen Temperaturen von bis zu 1000 °C zu betreiben. Derart hohe Temperaturen weisen jedoch den erheblichen Nachteil auf, dass das dieser Hitze ausgesetzte Material schnell ermüdet und somit verschleisst. Besonders anfällig auf zu hohe Temperaturen sind insbesondere die in die Brennkammer ragenden Wärmeabnahmerohre der Wärmekraftmaschine beziehungsweise des Wärmetauschers. Die Materialtemperatur dieser Rohre sollte abhängig vom Material vorzugsweise im Bereich zwischen 650 °C und 750 °C liegen. Es hat sich gezeigt, dass ein derartiges Rohr beispielsweise bei 700 °C eine sehr hohe Lebensdauer aufweist, wogegen sich die Lebensdauer bei 720 °C stark reduziert. Andererseits reduziert sich der Wirkungsgrad, falls die Wärmekraftmaschine mit wesentlich tieferer Temperatur betrieben wird. Es hat sich zudem gezeigt, dass sich die abgegebene Leistung eines Brenners im Verlaufe der Betriebszeit verändert, insbesondere dann, wenn ein Brenner nur einmal pro Jahr gewartet wird. Die Leistung eines Brenners verändert sich zudem auf Grund weiterer Einflüsse wie Brennstoffqualität oder Luftfeuchtigkeit. Um die Wärmekraftmaschine vor einer Überhitzung zu schützen war es daher bisher erforderlich den Brenner mit einer relativ tiefen Temperatur und somit mit reduziertem Wirkungsgrad zu betreiben.

Die erfindungsgemässe Wärmequelle beziehungsweise das erfindungsgemässe Verfahren ermöglichen nun, eine Prozesstemperatur Tp der Wärmequelle zu messen und die Ölzufuhr durch Verändern der Viskosität derart genau anzusteuern, dass die Prozesstemperatur Tp in einem vorbestimmten Wertebereich liegt. Unter Prozesstemperatur Tp wird die Temperatur eines Gegenstandes oder eines Fluides verstanden, welche an einer Stelle in der Wärmequelle auftritt. Als Prozesstemperatur Tp könnte beispielsweise die Wärme der Gase in der Brennkammer, oder die Wärme der Oberfläche einer in die Brennkammer ragenden Wärmeabnahmevorrichtung, oder die Wärme eines Fluides in der Wärmeabnahmevorrichtung verwendet werden. Die zugeführte Menge Öl wird derart angesteuert, dass die Prozesstemperatur Tp in einem vorbestimmten Wertebereich ΔTp liegt, zum Beispiel zwischen 700 °C und 750 °C. In einer bevorzugten Ausführungsform weist die Vorrichtung zur Wärmeabnahme in den Brennraum ragende Rohre auf, wobei die Materialtemperatur der Rohre als Prozesstemperatur Tp verwendet wird, um diese Temperatur während des Betriebs in einem vorbestimmten Wertebereich ΔTp zu halten. Dies ermöglicht sowohl eine lange Lebensdauer der Rohe als auch einen hohen Wirkungsgrad betreffend erzeugter elektrischer Energie zu gewährleisten. Der vorbestimmte Wertebereich ΔTp könnte beispielsweise innerhalb eines schmalen vorbestimmten Temperaturbereiches, beispielsweise zwischen 700 und 720 °C oder zwischen 700 und 710 °C, oder auf einem im Wesentlichen konstanten Wert von beispielsweise 700 °C gehalten werden.

Die Wärmequelle wird mit Hilfe eines Ölbrenners erhitzt, wobei die Ölzuführvorrichtung das dem Ölbrenner zugeführte Öl temperiert, das heisst je nach Erfordernis erwärmt und/oder kühlt. In einer bevorzugten Ausgestaltung ist die Temperiervorrichtung nur als eine ansteuerbare Heizung zum Erwärmen des Öls ausgestaltet. Es könnte jedoch zusätzlich auch noch eine Kühlvorrichtung vorgesehen sein. Die Temperiervorrichtung könnte beispielsweise als ein Peltier-Element ausgestaltet sein, welches entweder nur ein Kühlen oder sowohl ein Kühlen als auch ein Erwärmen erlaubt. Das Erwärmen des Öls verändert die Viskosität des Öls, und dadurch auch die über eine Düse in den Verbrennungsraum abgegebene Ölmenge. Dieses Erwärmen des Öls, beziehungsweise die damit verbundene Änderung der Viskosität des Öls, erlaubt eine äusserst feine Ansteuerung der zugeführten Ölmenge, und somit eine äusserst genaue Regelung der in der Brennkammer erzeugten Wärme. Dies ergibt den Vorteil, dass bei einem mit Öl betriebenen Blockheizkraftwerk die Prozesstemperatur in der Brennkammer und insbesondere auch die Materialtemperatur, beispielsweise von Fluid leitenden Rohren der Stirlingmaschine, sehr genau ansteuerbar und regelbar sind.

### Kurze Beschreibung der Zeichnungen

Die Erfindung wird nachfolgend an Hand von Ausführungsbeispielen erläutert. Die zur Erläuterung der Ausführungsbeispiele verwendeten Zeichnungen zeigen:
- Fig. 1: ein schematisches Diagramm einer Wärmequelle mit regelbarer Ölzuführung;
- Fig. 2: ein schematisches Diagramm eines weiteren Ausführungsbeispieles einer Wärmequelle mit regelbarer Ölzuführung;
- Fig. 3: schematisch ein Ausführungsbeispiel einer Wärmequelle.
Grundsätzlich sind in den Zeichnungen gleiche Teile mit gleichen Bezugszeichen versehen.

### Wege zur Ausführung der Erfindung

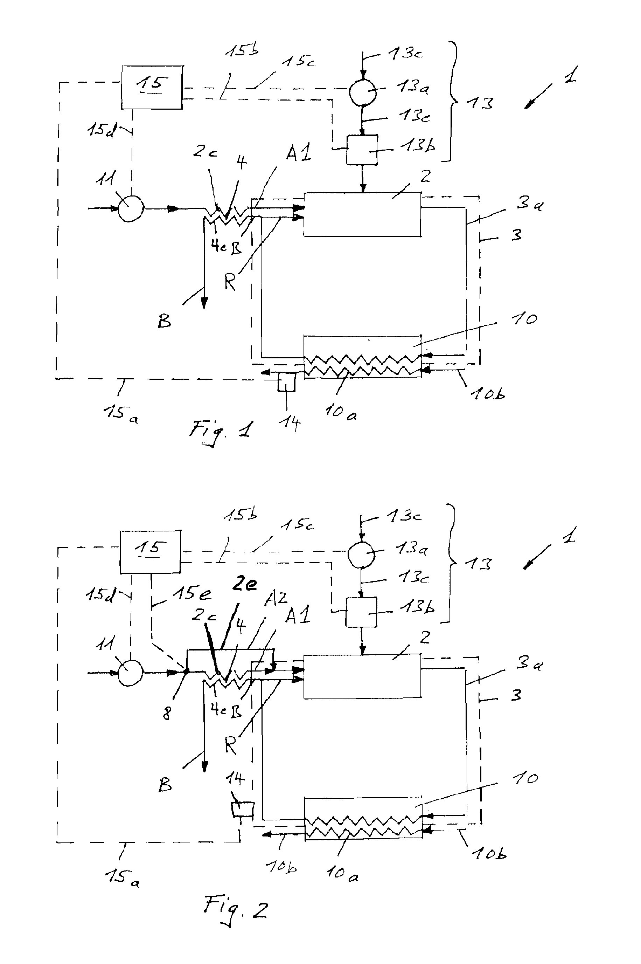

Fig. 1 zeigt schematisch eine Wärmequelle 1 mit einer regelbaren Ölzuführung 13, über welche eine ansteuerbare Menge Öl dem Ölbrenner 2 zuführbar ist. Die Wärmequelle 1 umfasst eine Brennkammer 3, in welche sowohl der Ölbrenner 2 als auch eine Vorrichtung zur Wärmeabnahme 10 hineinragt. Diese Vorrichtung zur Wärmeabnahme 10 könnte beispielsweise als Kopf einer Stirlingmaschine ausgestaltet sein. Dieser Kopf könnte beispielsweise Wärmetauscherrohe 10a umfassen, welche in die Brennkammer 3 hineinragen, und welche über einen Kühlmittelkreislauf 10b von einem Kühlmittel wie Helium durchströmt sind. Innerhalb der Brennkammer 3 bildet sich während dem Betrieb ein Gasstrom 3a aus, welcher die Vorrichtung zur Wärmeabnahme 10 umströmt, und welcher die Brennkammer 3 zumindest teilweise als Abgasstrom B verlässt. Es kann sich als vorteilhaft erweisen einen Teil des Gasstromes 3a als Rezirkulationsstrom R in der Brennkammer 3 zu belassen. Dem Brenner 2 beziehungsweise der Brennkammer 3 wird über einen ersten Luftstrom A1 Frischluft beziehungsweise Verbrennungsluft zugeführt, wobei die zugeführte Menge Luft pro Zeiteinheit vorteilhafterweise über ein Gebläse 11 ansteuerbar ist. An Stelle von Luft könnte auch ein anderes Oxidationsmittel beziehungsweise eine von Luft unterschiedliche Gaszusammensetzung zugeleitet werden. Die Ölzuführung 13 umfasst eine Brennstoffleitung 13c, eine Brennstoffpumpe 13a sowie eine Temperiervorrichtung 13b zum Erwärmen und/oder Kühlen des Öls, um derart die Viskosität des Öl und dadurch die dem Brenner 2 zugeführte Menge Öl pro Zeiteinheit zu beeinflussen.

Im dargestellten Ausführungsbeispiel wird als Prozesstemperatur Tp die Temperatur des Heliums nach dem Verlassen des Wärmetauschers 10a beziehungsweise die Temperatur dieser Leitung mit einem Temperatursensor 14 gemessen. Eine Regelvorrichtung 15 erfasst über eine Signalleitung 15a den gemessenen Wert des Temperatursensors 14, und steuert über die Signalleitungen 15b, 15c und 15d die Brennstoffpumpe 13a, die Temperiervorrichtung 13b sowie das Gebläse 11 an. Im dargestellten Ausführungsbeispiel weist die Vorrichtung zur Wärmeabnahme 10 eine maximal zulässige Betriebstemperatur Tpmax von 700 °C auf. Die Prozesstemperatur Tp darf beispielsweise in einem Bereich von 0 °C bis 50°C unterhalb der maximal zulässigen Betriebstemperatur Tpmax liegen, sodass die Prozesstemperatur Tp in einem vorbestimmten Temperaturbereich ΔTp von 650 °C bis 700 °C liegen darf. Die Regelvorrichtung 15 steuert die Temperiervorrichtung 13b an um die Viskosität des Öls derart zu beeinflussen, dass die Prozesstemperatur Tp im vorbestimmten Temperaturbereich ΔTp von 650 °C bis 700 °C liegt.

Durch die Beeinflussung der Viskosität des Öls kann die Prozesstemperatur Tp während des Betriebs der Wärmequelle 1 in einem eng definierten, vorbestimmten Temperaturbereich ΔTp gehalten werden. Dies ist insbesondere für Hochtemperaturwärmequellen, wie diese zum Beheizen eines Stirlingmotors bei Blockheizkraftwerken verwendet wird, von zentraler Bedeutung, um einerseits einen möglichst hohen Wirkungsgrad bezüglich der elektrisch erzeugten Energie zu erzielen, und um andererseits Komponenten wie den Wärmetauscher des Stirlingmotors vor thermischer Überlastung zu schützen. Eine Mehrzahl von Umwelteinflüssen wie zum Beispiel die Lufttemperatur oder die Luftfeuchtigkeit kann die Prozesstemperatur Tp beeinflussen. Zudem kann eine Mehrzahl weiterer Einflüsse wie z.B. der Brennwert des Öls die Prozesstemperatur Tp beeinflussen. Die erfindungsgemässe Wärmequelle beziehungsweise das erfindungsgemässe Betriebsverfahren ermöglicht es all diese Einflüsse zu kompensieren, und die Prozesstemperatur Tp in einem vorgebbaren Temperaturbereich ΔTp zu halten. Dieser Temperaturbereich kann der Regelungsvorrichtung 15 vorgegeben werden, sodass diese die Viskosität entsprechend beeinflusst, um die Prozesstemperatur Tp in diesem Bereich zu halten.

Die Temperiervorrichtung 13b ist vorteilhafterweise als Heizvorrichtung, insbesondere als eine elektrische Heizung ausgestaltet.

Der Abgasstrom B wird in einer vorteilhaften Ausgestaltung, wie in Figur 1 dargestellt, durch einen Wärmetauscher 4 geführt, welcher einen Abgaskanal 4c und einen ersten Luftkanal 2c umfasst, um den Abgasstrom B zu kühlen und gleichzeitig den ersten Luftstrom A1 zu erwärmen.

Figur 2 zeigt schematisch ein weiteres Ausführungsbeispiel einer Wärmequelle 1. Im Unterschied zum Ausführungsbeispiel gemäss Figur 1 weist die in Figur 2 dargestellte Wärmequelle 1 einen zweiten Zuluftkanal 2e auf, welcher den Wärmetauscher 4 überbrückt, sodass der zweite Zuluftkanal 2e ohne einen Wärmeaustausch mit Abgasen der Brennkammer 3 zugeleitet ist. Zudem ist ein ansteuerbares Ventil 8 angeordnet, über welches die durch den ersten und/oder zweiten Zuluftkanal 2c, 2e strömende Luftmenge angesteuert werden kann. Das Ventil 8 ist über die Signalleitung 15e mit der Regelvorrichtung 15 verbunden. Durch diese Anordnung kann die Temperatur der dem Ölbrenner 2 zugeführten Luft beeinflusst werden, was zudem die Prozesstemperatur Tp beeinflusst, sodass die Prozesstemperatur Tp sowohl über die Ansteuerung des Erwärmungsvorrichtung 13b als auch über die Stellung des Ventils 8 beeinflussbar ist.

Ein Blockheizkraftwerk wird zur Erzeugung von elektrischer Energie und zur Erzeugung von Heizwärme verwendet. Die erforderliche Heizleistung variiert in Abhängigkeit der Jahreszeit. Die in Figur 2 dargestellte Wärmequelle 1 kann in einem vorteilhaften Verfahren derart betrieben werden, dass die zugeführte Menge Öl und/oder die über den ersten und/oder zweiten Zuluftkanal (2c,2e) zugeführt Menge Luft derart angesteuert wird, dass die Wärmemenge des aus dem Abgaskanal 4c austretenden Abgasstromes B verändert wird, wogegen die Prozesstemperatur Tp im vorbestimmten Temperaturbereich ΔTp gehalten wird. Dieses Verfahren gewährleistet, dass die Erzeugung der elektrischen Energie unter einem hohen Wirkungsgrad erfolgt, dass Komponenten der Wärmequelle 1 oder der Vorrichtung zur Wärmeabnahme 10 keiner übermässigen Temperaturbelastung ausgesetzt sind, und dass zudem die über den Abgasstrom B zur Verfügung gestellte Wärmeleistung variierbar ist.

In dem in Figur 2 dargestellten Ausführungsbeispiel wird als Prozesstemperatur Tp die Temperatur des Gasstromes 3a gemessen.

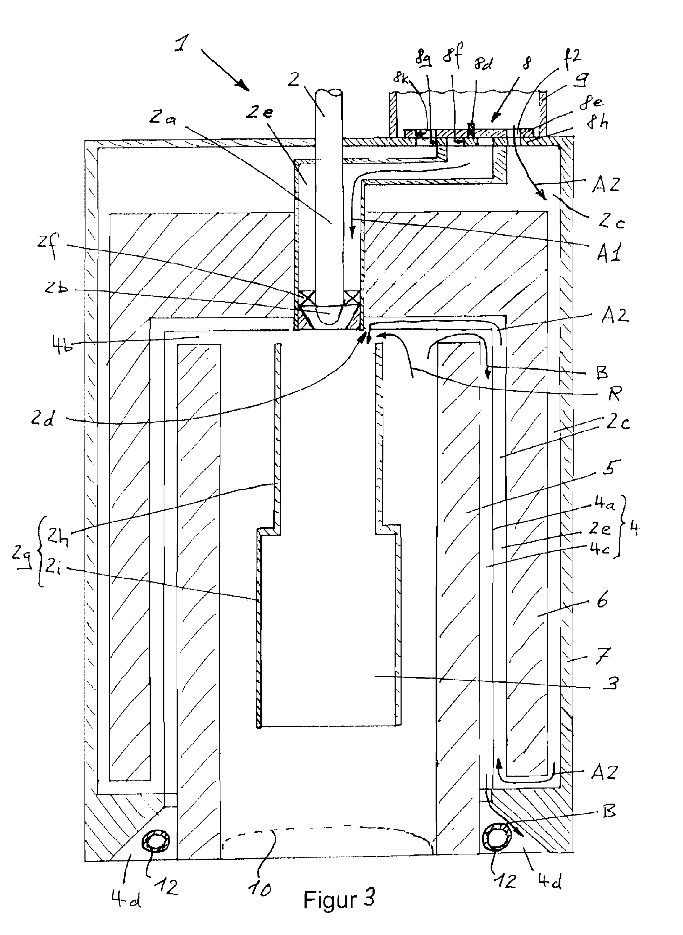

Figur 3 zeigt ein Ausführungsbeispiel der in Figuren 1 und 2 nur schematisch dargestellten Wärmequelle 1 im Detail, wobei die Brennstoffzuleitung 13, der Sensor 14 und die Regelungsvorrichtung 15 nicht dargestellt sind. Figur 3 zeigt ein Ausführungsbeispiel der Wärmequelle 1 schematisch in einem Längsschnitt. Diese Wärmequelle 1 weist den Vorteil auf, dass deren abgegebene Wärmeleistung variierbar ist. Die Wärmequelle 1 umfasst einen Ölbrenner 2 mit Brennstoffzuleitung 2a und Brennstoffdüse 2b, welche in den Brennraum 3 münden. Die Brennstoffzuleitung 2a ist von einem ersten Fluid leitenden Kanal 2c umgeben, in welchem ein erster Zuluftstrom A1 über einen Verwirbelungseinsatz 2f der Brennstoffdüse 2b zugeleitet wird. Die Wärmequelle 1 umfasst einen zweiten Fluid leitenden Kanal 2e, welcher über einen Wärmetauscher 4, auch als Rekuperator bezeichnet, geleitet ist, und über ringförmig um den Auslass der Brennstoffdüse 2b angeordnete Austrittsöffnungen 2d in den Brennraum 3 mündet. Im zweiten Zuführkanal 2e wird der Brennstoffdüse 2b ein zweiter Zuluftstrom A2 zugeführt. Die derart geleitete Luft wird im Bereich der Brennstoffdüse 2b mit austretendem Brennstoff vermischt. Der Brennstoffdüse 2b nachfolgend und innerhalb der Brennkammer 3 ist ein Flammrohr 2g umfassend ein Vorverdampfungsrohr 2h und ein Stationärrohr 2i angeordnet. Der Ölbrenner 2 wird vorzugsweise derart betrieben, dass der Brennstoff und die Luft innerhalb der Brennkammer 3 eine möglichst homogene Durchmischung erfahren, und dass sich in der Brennkammer 3 ein Rezirkulationsstrom R mit einer Rezirkulationsrate r von kleiner oder gleich zwei, oder sogar eine Rezirkulationsrate r zwischen zwei und zehn ausbildet. Die Rezirkulationsrate r ist das Verhältnis des Rezirkulationsstromes R bezüglich des gesamten Zuluftstroms A1 und A2. Dadurch wird ein grosses Flammenvolumen ohne lokale Temperaturspitzen erzeugt, was die Bildung von NOx signifikant reduziert. Ein derartig betriebener Ölbrenner wird auch als ein Hochrezirkulationsbrenner bezeichnet.

Die Brennkammer 3 der Wärmequelle 1 ist von einer Innenisolation 5 sowie einer Aussenisolation 6 umgeben. Zwischen der Innen- und Aussenisolation 5, 6 verläuft ein nur schematisch dargestellter Wärmetauscher 4, welcher eine Trennwand 4a, einen Teilabschnitt des zweiten Luftkanals 2e, sowie einen Teilabschnitt das Abgaskanals 4c umfasst. Der Abgaskanal 4c beginnt an der Austrittsöffnung 4b der Brennkammer 3 und leitet den Abgasstrom B über den Wärmetauscher 4 dem Abgasauslass 4d zu. Am Abgasauslass 4d ist ein Wasser leitendes Wärmeaufnahmerohr 12 angeordnet, welches dem Abgasstrom B Wärme für Heizzwecke entzieht. Zwischen der Aussenwand 7 und der Aussenisolation 6 verläuft im dargestellten Ausführungsbeispiel der zweite Zuluftkanal 2e nach unten, und ist danach über den Wärmetauscher 4 und die Austrittsöffnung 2d in den Brennraum 3 geleitet. Der Kopf einer Stirlingmaschine 10, welcher nur schematisch angedeutet ist, ragt in den Brennraum 3 hinein, um derart beheizt zu werden.

Die beiden Zuluftkanäle 2c, 2e sind mit einem Ventil 8 versehen, um die zufliessende Luftmenge pro Zeiteinheit anzusteuern. Jeder Zuluftkanal 2c, 2e könnte mit einem separaten, individuell ansteuerbaren Regelventil 8, beispielsweise je einem elektromagnetischen Auf-Zu-Ventil, versehen sein. In der einfachsten Ausgestaltung sind beide Regelventile 8 als Auf-Zu-Ventile ausgestaltet, welche nur eine Offen- und eine Geschlossenstellung einnehmen können. Dies erlaubt entweder nur dem ersten Zuluftkanal 2c, oder nur dem zweiten Zuluftkanal 2e, oder sowohl dem ersten als auch dem zweiten Zuluftkanal 2c, 2e Luft zuzuführen. Um die Prozesstemperatur in der Brennkammer 3 ungefähr konstant zu halten ist beim Schalten der Regelventile 8 zudem die über die Brennstoffdüse 2b zugeleitete Brennstoffmenge anzupassen. Dies ermöglicht, die Wärmequelle vorzugsweise derart zu betreiben, dass die vom Stirlingmotor in der Brennkammer 3 abgeführte Wärmeleistung konstant bleibt, sodass der mit dem Stirlingmotor verbundene Generator eine konstante elektrische Leistung erzeugt, wogegen die über das Abgas B am Auslass 4d zur Verfügung stehende Wärmeleistung drei unterschiedliche Werte Q1, Q2 und Q3 aufweisen kann.

Im Ausführungsbeispiel gemäss Figur 3 wird ein Dreiwegregelventil 8 verwendet, welches wie folgt ausgestaltet ist: Das Gehäuse 7 weist eine Grundplatte 8h mit Durchlassöffnungen 8f und 8g auf, wobei die Wärmequelle 1 derart ausgestaltete Trennwände und Rohre aufweist, dass die Durchlassöffnungen 8f in den ersten Zuluftkanal 2c münden und die Durchlassöffnungen 8g in den zweiten Zuluftkanal 2e münden. Auf der Grundplatte 8h ist eine um das Drehlager 8d drehbare, als Scheibe ausgestaltete Abdeckung 8e angeordnet, welche derart angeordnete Durchlassöffnungen 8g, 8f aufweist, dass in Abhängigkeit der Drehstellung der Scheibe 8e entweder nur die Durchlassöffnungen 8f oder die Durchlassöffnungen 8g vollständig geöffnet sind, oder dass sowohl die Durchlassöffnung 8f als auch die Durchlassöffnung 8g teilweise geöffnet sind. Ein Luftzuführkanal 9 ist mit dem Ventil 8 verbunden. Stromaufwärts könnte sowohl beim Luftzuführkanal 9 als auch bei der Brennstoffzuleitung 2a eine nicht dargestellte Pumpe 11 angeordnet sein. Die Durchlassöffnungen 8g, 8f könnten auch derart angeordnet sein, dass die Abdeckung 8e durch ein lineares Verschieben die Durchtrittsöffnung verschliesst beziehungsweise öffnet.

Wird die Wärmequelle 1 aus dem kalten Zustand in Betrieb genommen, so kann die erfindungsgemässe Wärmequelle 1 mit einem Startverfahren betrieben werden, das ein schnelles Aufheizen gewährleistet. Dazu wird während dem Aufheizen der Wärmequelle 1 dem Ölbrenner 2 eine zusätzliche Menge Öl und dem ersten und/oder zweiten Zuluftkanal 2c, 2e eine zusätzliche Menge Luft zugeführt wird, solange die Prozesstemperatur Tp unterhalb eines vorbestimmten Temperaturbereiches ΔTp liegt. Somit ist gewährleistet, dass Komponenten der Wärmequelle oder der Vorrichtung zur Wärmeabnahme 10 keiner übermässigen Temperaturbelastung unterliegen, und die Prozesstemperatur Tp während dem Hochfahren der Wärmequelle 1 trotzdem möglichst rasch den Zielwert Tp erreicht. Die Wärmequelle 1 weist nach dem Hochfahren einen vorzugsweise stationären Betrieb auf, während welchem eine ungefähr konstante Menge Öl beziehungsweise eine konstante Menge Luft pro Zeiteinheit zugeführt wird. Unter zusätzlicher Menge Öl oder Luft wird daher eine diese konstante Menge übersteigende, zusätzliche Menge verstanden.
Die Vorrichtung zur Wärmeabnahme 10 kann auf unterschiedlichste Weise ausgestaltet sein, vorzugsweise als Heizkopf eines Stirlingmotors, jedoch beispielsweise auch als eine von einem Fluid wie Wasser durchströmte Leitung.

## Patentansprüche

1. Wärmequelle (1) mit regelbarer Ölzuführung (13), umfassend eine Brennkammer (3) zur Erzeugung von Wärme, sowie umfassend einen Ölbrenner (2) und eine Vorrichtung zur Wärmeabnahme (10), welche in die Brennkammer (3) münden, **dadurch gekennzeichnet, dass** die Ölzuführung (13) eine Temperiervorrichtung (13b) zur Erwärmung und/oder Kühlung des Öls umfasst, dass ein Sensor (14) zum Messen einer Prozesstemperatur (Tp) der Wärmequelle (1) angeordnet ist, und dass eine Regelvorrichtung (15) mit dem Sensor (14) sowie der Temperiervorrichtung (13b) verbunden und derart wirkend ausgestaltet ist, dass die Prozesstemperatur (Tp) in einem vorbestimmten Temperaturbereich (ΔTp) liegt.

2. Wärmequelle (1) nach Anspruch 1, **dadurch gekennzeichnet, dass** die Temperiervorrichtung (13b) als Heizvorrichtung ausgestaltet ist.

3. Wärmequelle (1) nach einem der vorhergehenden Ansprüche, **dadurch gekennzeichnet, dass** diese einen Wärmetauscher (4) umfasst, wobei die Brennkammer (3) Fluid leitend mit einem Abgaskanal (4c) verbunden ist, welcher über den Wärmetauscher (4) verläuft, und wobei die Brennkammer (3) Fluid leitend mit einem ersten Zuluftkanal (2c) verbunden ist, welcher über den Wärmetauscher (4) verläuft.

4. Wärmequelle (1) nach Anspruch 3, **dadurch gekennzeichnet, dass** die Brennkammer (3) Fluid leitend mit einem zweiten Zuluftkanal (2e) verbunden ist, wobei der zweite Zuluftkanal (2e) ohne einen Wärmeaustausch mit Abgasen der Brennkammer (3) zugeleitet ist, und dass ein ansteuerbares Ventil (8) angeordnet ist, um die durch den ersten und/oder zweiten Zuluftkanal (2c, 2e) strömende Luftmenge zu beeinflussen.

5. Verfahren zum Betrieb einer Wärmequelle (1) nach einem der vorhergehenden Ansprüche, **dadurch gekennzeichnet, dass** die Temperiervorrichtung (13b) die Viskosität des Öls derart beeinflusst, dass die Prozesstemperatur (Tp) in einem vorbestimmten Temperaturbereich (ΔTp) liegt.

6. Verfahren nach Anspruch 5, **dadurch gekennzeichnet, dass** die Vorrichtung zur Wärmeabnahme (10) eine maximal zulässige Betriebstemperatur (Tpmax) aufweist, und dass die Temperiervorrichtung (13b) derart angesteuert wird, dass die Prozesstemperatur (Tp) in einem Bereich von 0 °C bis 50 °C unterhalb der maximal zulässigen Betriebstemperatur (Tpmax) liegt.

7. Verfahren nach Anspruch 6, **dadurch gekennzeichnet, dass** die Prozesstemperatur (Tp) in einem Bereich von 0 °C bis 20 °C unterhalb der maximal zulässigen Betriebstemperatur (Tpmax) liegt.

8. Verfahren nach einem der Ansprüche 5 bis 7, **dadurch gekennzeichnet, dass** während dem Aufheizen der Wärmequelle (1) dem Ölbrenner (2) eine zusätzliche Menge Öl und dem ersten und/oder zweiten Zuluftkanal (2c, 2e) eine zusätzliche Menge Luft zugeführt wird, solange die Prozesstemperatur (Tp) unterhalb eines vorbestimmten Temperaturbereiches (ΔTp) liegt.

9. Verfahren nach einem der Ansprüche 5 bis 8, **dadurch gekennzeichnet, dass** die zugeführte Menge Öl und/oder die über den ersten und/oder zweiten Zuluftkanal (2c,2e) zugeführt Menge Luft derart angesteuert wird, dass die Wärmemenge des aus dem Abgaskanal (4c) austretenden Abgasstromes (B) verändert wird, wogegen die Prozesstemperatur (Tp) im vorbestimmten Temperaturbereich (ΔTp) liegt.

10. Blockheizkraftwerk umfassend eine Wärmequelle (1) nach einem der Ansprüche 1 bis 4, sowie umfassend einen Stirlingmotor mit einer Wärmeabnahmevorrichtung (10).
